# EUROPÄISCHE PATENTSCHRIFT

(11) **EP 2 102 621 B1**
(45) Veröffentlichungstag und Bekanntmachung des Hinweises auf die Patenterteilung: **31.08.2016**
(21) Anmeldenummer: 07821723.9
(22) Anmeldetag: 23.10.2007
(51) Int. Cl.: G01L 23/10, F23Q 7/00

(54) **DRUCKMESSEINRICHTUNG**
PRESSURE GAUGE
DISPOSITIF DE MESURE DE PRESSION

(30) Priorität: 18.12.2006 DE 102006059693
(43) Veröffentlichungstag der Anmeldung: 23.09.2009
(73) Patentinhaber: ROBERT BOSCH GMBH, 70442 Stuttgart (DE)
(72) Erfinder: KERN, Christoph, 71546 Aspach (DE); ZACH, Reiko, 71686 Remseck (DE); KLEINDL, Michael, 71701 Schwieberdingen (DE); DOERING, Christian, 70563 Stuttgart (DE); SCHOTT, Steffen, 71701 Schwieberdingen (DE); SALTIKOV, Pavlo, 71334 Waiblingen (DE)
(86) Internationale Anmeldenummer: PCT/EP2007/061359
(87) Internationale Veröffentlichungsnummer: WO 2008/074547

(56) Entgegenhaltungen:
- WO-A-2006/089446
- CH-A- 537 013
- DE-A1-102004 063 750
- GB-A- 835 158
- US-A- 3 673 443

## Beschreibung

### Stand der Technik

Die Erfindung betrifft eine Druckmessglühkerze nach dem Oberbegriff des Anspruchs 1.

Aus DE 102004 063750 A1 ist eine Druckmessglühkerze mit einer innerhalb eines Gehäuses angeordneten Druckmesseinrichtung bekannt. Die Druckmessglühkerze weist ein als Glühstift ausgebildetes Kraftübertragungselement auf, das an einer kammerseitigen Öffnung teilweise aus dem Gehäuse ragt. Zwischen dem Kraftübertragungselement und der Druckmesseinrichtung ist dabei ein Wärmedämmelement angeordnet. Zusätzlich verfügt die Druckmessglühkerze über eine Metallmembran als Wärmeleitmittel, welches einen Wärmefluss vom Kraftübertragungselement zum Gehäuse hin ermöglicht.

Eine weitere Druckmessglühkerze mit einem innerhalb eines Gehäuses angeordneten Drucksensor ist aus WO 2006/089446 A1 bekannt. Hierbei ist der Drucksensor mit zwei angrenzenden keramischen Bauteilen in einer Vormontageeinheit zusammengefasst. Zum Ausführen der Vormontageeinheit ist ein Schrumpfschlauch vorgesehen, der den Drucksensor und die beiden angrenzenden keramischen Bauteile umfasst. Eine Wärmeableitung vom Kraftübertragungselement in das Gehäuse wird mittels einer Metallmembran realisiert, die in der Nähe der brennraumseitigen Öffnung des Gehäuses angeordnet ist.

Eine Zündkerze mit einem in einem Gehäuse integrierten Drucksensor ist aus EP-A 835158 bekannt. Ein Druckmesswandler, bei dem der aufgenommene Druck von einem Kraftübertragungselement über eine Membran auf einen Drucksensor übertragen wird, ist aus CH 537013 bekannt. Ein weiterer Druckmesswandler zur Aufnahme eines Drucks in einen Brennraum einer Brennkraftmaschine geht aus US 3673443 A hervor. Dabei ist der Drucksensor in axialer Richtung beabstandet von einer brennraumseitigen Öffnung innerhalb eines Gehäuses angeordnet, wobei die Kraftübertragung über eine Membran und einen daran sich anschließenden keramischen Körper erfolgt. Durch diese Maßnahme ist der Drucksensor in einem thermisch weniger belasteten Bereich angeordnet.

Bei einem in einen Kerzenkörper integriert Drucksensor besteht das Problem, dass die an dem Heizstab herrschende Wärme zum Teil in den Kerzenkörper und somit an den Drucksensor geleitet wird. Dadurch werden entsprechende Anforderungen an den Drucksensor gestellt beziehungsweise der Einsatzbereich einer solchen Druckmessglühkerze ist entsprechend eingeschränkt.

Aus der DE 103 43 521 A1 ist eine weitere Druckmessglühkerze für einen Dieselmotor bekannt. Die bekannte Druckmessglühkerze umfasst einen Kerzenkörper zum Einsetzen in einen Zylinder des Dieselmotors, einen Heizstab, der in dem Kerzenkörper angeordnet ist, und einen Drucksensor, der im Bereich eines kammerfernen Endes des Kerzenkörpers vorgesehen ist. Dabei wird der Drucksensor durch den vom Heizstab übertragenen Druck im Brennraum des Zylinders beeinflusst, wodurch eine Druckmessung möglich ist.

Die aus der DE 103 43 521 A1 bekannte Druckmessglühkerze hat den Nachteil, dass durch die Anordnung des Drucksensors an dem kammerfernen Ende des Kerzenkörpers die Gesamtlänge der Druckmessglühkerze vergrößert wird. Speziell ergeben sich auf Grund des dadurch definierten Platzbedarfs entsprechend ungünstige Anforderungen an die Konstruktion der Brennkraftmaschine.

### Offenbarung der Erfindung

Die erfindungsgemäße Druckmesseinrichtung mit den Merkmalen des Anspruchs 1 hat den Vorteil, dass der von der Druckmesseinrichtung benötigte Einbauraum reduziert ist und insbesondere eine Druckmesseinrichtung mit reduzierter Gesamteinbaulänge geschaffen ist.

Durch die Anordnung des Wärmedämmelements zwischen dem Kraftübertragungselement und der Druckmesseinrichtung ergibt sich der Vorteil, dass die Druckmesseinrichtung relativ nah an der kammerseitigen Öffnung des Gehäuses, an der das Kraftübertragungselement aus dem Gehäuse ragt, angeordnet sein kann. Die Länge von zusätzlichen Kraftübertragungselementen kann dadurch reduziert werden oder solche zusätzlichen Kraftübertragungselemente können gegebenenfalls auch entfallen. Ferner kann die Länge des Teils des Kraftübertragungselements, das in dem Gehäuse angeordnet ist, reduziert werden, da eine relativ nahe Anordnung der Druckmesseinrichtung an der kammerseitigen Öffnung durch die von dem Wärmedämmelement gewährleistete Wärmedämmung möglich ist.

Zwischen dem Kraftübertragungselement und dem Gehäuse ist zumindest ein Wärme leitendes Wärmeleitmittel vorgesehen, das einen Wärmefluss von dem Kraftübertragungselement zu dem Gehäuse ermöglicht. Das Wärmeleitmittel kann auf unterschiedliche Weise ausgebildet sein. Beispielsweise kann das Wärmeleitmittel aus einer Wärme leitenden Paste, insbesondere einer Graphitpaste, bestehen. Das Wärmeleitmittel kann auch durch vorzugsweise metallische Elemente gebildet sein. Das Wärmeleitmittel ist durch eine Metallmembran gebildet, die einerseits mit dem Kraftübertragungselement und andererseits zumindest mittelbar mit dem Gehäuse verbunden ist. Um einen größeren Wärmefluss von dem Kraftübertragungselement zu dem Gehäuse zu ermöglichen, können auch mehrere solche Wärmeleitmittel vorgesehen sein. Beispielsweise kann neben einer Metallmembran auch eine wärmeleitende Paste vorgesehen sein, die zumindest teilweise die Metallmembran umgibt und/oder zumindest teilweise das Kraftübertragungselement umgibt.

Das Wärmeleitmittel ist in einem Bereich innerhalb des Gehäuses vorgesehen, der in der Nähe der kammerseitigen Öffnung des Gehäuses liegt. Dadurch kann die Ableitung der Wärme von dem Kraftübertragungselement auf das Gehäuse möglichst nahe an der kammerseitigen Öffnung erfolgen, so dass die Druckmesseinrichtung einen relativkurzen Abstand zu der kammerseitigen Öffnung haben kann, wodurch eine weitere Reduzierung der Gesamtlänge beziehungsweise eine Vergrößerung der konstruktiven Freiheiten ermöglicht ist.

Durch die in den Unteransprüchen aufgeführten Maßnahmen sind vorteilhafte Weiterbildungen der im Anspruch 1 angegebenen Druckmessglühkerze möglich.

Vorteilhaft ist es, dass das Wärmedämmelement als hülsen- oder ringförmiges Wärmedämmelement ausgebildet ist, dass das Kraftübertragungselement an einem dem Wärmedämmelement zugewandten Ende als rohrförmiges Kraftübertragungselement ausgestaltet ist und dass sich das rohrförmige Kraftübertragungselement an dem hülsen- oder ringförmigen Wärmedämmelement abstützt. Die hülsen- oder ringförmige Ausgestaltung des Wärmedämmelements ermöglicht eine Reduzierung des effektiven Querschnitts, so dass der thermische Widerstand des Wärmedämmelements vergrößert ist. Dadurch ist eine vorteilhafte Wärmedämmung bezüglich der Druckmesseinrichtung geschaffen.

Ferner ist es vorteilhaft, dass das Wärmedämmelement aus einer Keramik, einem Glas oder einem Glasfaser-Kunstharz-Verbundwerkstoff gebildet ist. Als keramischer Werkstoff kann beispielsweise Steatit, Zirkoniumdioxid oder teilstabilisiertes Zirkoniumdioxid mit einer Wärmeleitfähigkeit aus einem Bereich von etwa 1,2 W/mK bis etwa 3,5 W/mK gebildet sein. Ferner kann ein Glas mit einer Wärmeleitfähigkeit aus einem Bereich von etwa 0,8 W/mK bis etwa 1,0 W/mK oder ein Kunstharz-Glasfaser-Verbundwerkstoff mit einer Wärmeleitfähigkeit von etwa 0,1 W/mK bis etwa 0,2 W/mK als Werkstoff für das Wärmedämmelement dienen. Die ring- oder hülsenförmige Ausgestaltung des Wärmedämmelements hat außerdem den Vorteil einer einfachen Herstellbarkeit beziehungsweise ermöglicht dies eine individuelle Anpassung an den jeweiligen Einsatzbereich mit relativ geringen Kosten.

In vorteilhafter Weise ist das Wärmedämmelement als Aufnahmeelement ausgestaltet, das einen Kraftübertragungsabschnitt und einen Aufnahmeabschnitt aufweist, wobei zumindest ein Drucksensor der Druckmesseinrichtung auf dem Aufnahmeabschnitt des Aufnahmeelements angeordnet ist und wobei das Kraftübertragungselement mit dem Drucksensor über den Kraftübertragungsabschnitt des Aufnahmeelements in Wirkverbindung steht. Dadurch kann das Wärmedämmelement als multifunktionelles Bauteil der Druckmesseinrichtung zugleich die Aufnahme des Drucksensors und gegebenenfalls weiterer Elemente der Druckmesseinrichtung sowie gegebenenfalls die Aufnahme eines Fixierelements ermöglichen. Dadurch kann ein separates Aufnahmeelement eingespart werden, so dass die Anzahl der Bauteile der Druckmesseinrichtung verringert ist und eine Reduzierung der Gesamteinbaulänge der Druckmesseinrichtung ermöglicht ist.

Vorteilhaft ist es, dass ein erstes Wärmedämmelement und ein zweites Wärmedämmelement vorgesehen sind, dass das Kraftübertragungselement an dem ersten Wärmedämmelement anliegt, dass das zweite Wärmedämmelement zwischen dem ersten Wärmedämmelement und der Druckmesseinrichtung angeordnet ist und dass eine mechanische Festigkeit des ersten Wärmedämmelements größer ist als eine mechanische Festigkeit des zweiten Wärmedämmelements. Durch zwei oder mehr unterschiedlich ausgestaltete Wärmedämmelemente können optimierte Materialpaarungen gewählt werden, wobei speziell eine Anpassung hinsichtlich der benötigten mechanischen Festigkeit und einer diesbezüglich möglichst kleinen spezifischen Wärmeleitfähigkeit möglich ist. Beispielsweise kann das Kraftübertragungselement in Bezug auf das erste Wärmedämmelement an einer relativ kleinen Anlagefläche anliegen, so dass sich eine relativ große mechanische Beanspruchung des ersten Wärmedämmelements ergibt. Das erste Wärmedämmelement ist dann vorzugsweise aus einem Werkstoff gebildet, der eine ausreichend hohe mechanische Festigkeit aufweist, um die auftretenden Kräfte aufzunehmen, und in Bezug auf diese hohe mechanische Festigkeit eine noch relativ günstige Wärmedämmung ermöglicht, das heißt eine noch relativ niedrige Wärmeleitfähigkeit aufweist. Die Kontaktfläche zwischen dem ersten Wärmedämmelement und dem zweiten Wärmedämmelement und/oder die Materialpaarung zwischen dem ersten Wärmedämmelement und dem zweiten Wärmedämmelement ermöglicht dann eine geringere mechanische Festigkeit des zweiten Wärmedämmelements, so dass für das zweite Wärmedämmelement ein Werkstoff mit einer niedrigeren Wärmeleitfähigkeit zum Einsatz kommen kann. Je nach Anwendungsfall ermöglichen daher zwei und mehr verschiedene Wärmedämmelemente eine weitere Optimierung hinsichtlich der Wärmeisolierung der Druckmesseinrichtung und des damit verbundenen Platzbedarfs.

### Kurze Beschreibung der Zeichnungen

Bevorzugte Ausführungsbespiele sind in der nachfolgenden Beschreibung anhand der beigefügten Zeichnungen, in den sich entsprechende Elemente mit übereinstimmenden Bezugszeichen versehen sind, näher erläutert. Es zeigt:
Fig. 1 ein erstes Ausführungsbeispiel einer erfindungsgemäßen Druckmesseinrichtung in einer schematischen Schnittdarstellung;
Fig. 2 den in Fig. 1 mit II bezeichneten Ausschnitt einer Druckmesseinrichtung gemäß einem zweiten Ausführungsbeispiel und
Fig. 3 ein Wärmedämmelement einer Druckmesseinrichtung gemäß einem dritten Ausführungsbeispiel in einer axialen, schematischen Schnittdarstellung.

### Ausführungsformen der Erfindung

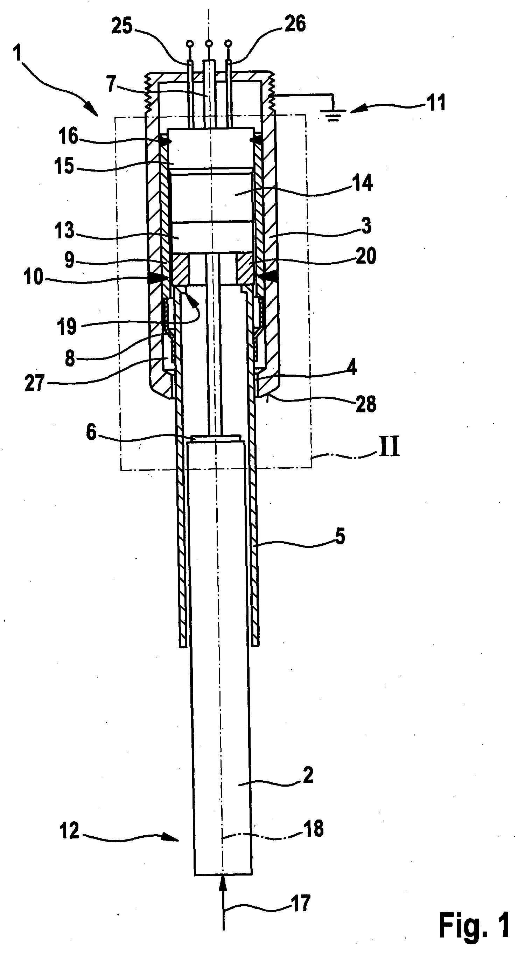

Fig. 1 zeigt ein erstes Ausführungsbeispiel einer Druckmesseinrichtung 1 in einer axialen Schnittdarstellung. Die Druckmesseinrichtung 1 ist dabei als Druckmessglühkerze 1 für eine luftverdichtende, selbstzündende Brennkraftmaschine ausgestaltet. Ein stabförmiges Heizelement 2 der Druckmessglühkerze 1 ragt bei Vor- und Wirbelkammermotoren in eine Kammer der Brennkraftmaschine und bei Motoren mit Direkteinspritzung in eine Brennkammer des Motors. Die erfindungsgemäße Druckmesseinrichtung 1 eignet sich jedoch auch für andere Anwendungsfälle. Speziell kann die Druckmesseinrichtung 1 auch als Druckmesszündkerze oder als Druckmesseinspritzventil für gemischverdichtende, fremdgezündete Brennkraftmaschinen ausgestaltet sein.

Die Druckmessglühkerze 1 weist ein Gehäuse 3 auf, das eine kammerseitige Öffnung 4 umfasst. Das stabförmige Heizelement 2 ist abschnittsweise von einem Kraftübertragungselement 5 umgeben. Ferner ist der stabförmige Heizkörper 2 mechanisch mit dem Kraftübertragungselement 5 verbunden. Das Kraftübertragungselement 5 ist teilweise innerhalb des Gehäuses 3 angeordnet und ragt an der kammerseitigen Öffnung 4 teilweise aus dem Gehäuse 3.

Das stabförmige Heizelement 2 ist über ein Anschlusselement 6 mit einer Glühstromleitung 7 verbunden. Ferner ist eine Metallmembran 8 vorgesehen, die einerseits mit dem metallischen Kraftübertragungselement 5 und andererseits mit einem Sensorkäfig 9 verbunden ist. Der Sensorkäfig 9 ist mittels einer Schweißnaht 10 mit dem Gehäuse 3 der Druckmesseinrichtung 1 verbunden. Das stabförmige Heizelement 2 ist somit einerseits mit der Glühstromleitung 7 und andererseits über das metallische Kraftübertragungselement 5, die Metallmembran 8 und den metallischen Sensorkäfig 9 mit dem Gehäuse 3 verbunden. Das Gehäuse 3 ist im montierten Zustand der Druckmessglühkerze 1 über den Motorblock mit elektrischer Masse 11 verbunden, so dass durch Anlegen einer Betriebsspannung an die Glühstromleitung 7 ein Glühstrom in dem stabförmigen Heizelement 2 erzeugt wird, der zum Aufheizen des stabförmigen Heizelements 2, insbesondere im Bereich einer Spitze 12 des stabförmigen Heizelements 2, führt.

Im Inneren des Gehäuses 3 ist ein von dem Sensorkäfig 9 umgebenes Aufnahmeelement 13 angeordnet, das eine Druckmesseinrichtung 14 und ein Fixierelement 15 aufnimmt. Das Fixierelement 15 ist dabei über eine Schweißverbindung 16 mit dem Sensorkäfig 9 verbunden. Die Glühstromleitung 7 ist durch das Fixierelement 15, die Druckmesseinrichtung 14 und das Aufnahmeelement 13 geführt, die hierfür entsprechende Durchgangsbohrungen aufweisen.

Im Betrieb der Brennkraftmaschine wird durch den Druck im Brennraum eine Kraft 17 hervorgerufen, die in Richtung einer Achse 18 der Druckmessglühkerze 1 auf das stabförmige Heizelement 2 einwirkt. Da das stabförmige Heizelement 2 mit dem Kraftübertragungselement 5 verbunden ist, wird die Kraft 17 über das Kraftübertragungselement 5 in das Gehäuse 3 auf die Druckmesseinrichtung 14 geleitet. Die Metallmembran 8 ist vorzugsweise relativ dünnwandig und somit elastisch ausgestaltet, so dass ein Kraftnebenschluss über die Metallmembran 8 und den Sensorkäfig 9 auf das Gehäuse 3 vermieden ist.

Das Kraftübertragungselement 5 weist einen innenliegenden Kragen 19 auf, an dem sich das Kraftübertragungselement 5 über ein Wärmedämmelement 20 an dem Aufnahmeelement 13 abstützt. Zwischen dem Aufnahmeelement 13 und dem Fixierelement 15 ist zumindest ein Drucksensor der Druckmesseinrichtung 14 angeordnet, so dass die Druckmesseinrichtung 14 zumindest im Wesentlichen von der Kraft 17 beaufschlagt ist, die von dem im Brennraum herrührenden Druck erzeugt ist. Dadurch ist eine Messung des Druckes im Brennraum mittels der Druckmesseinrichtung 14 möglich. Die von dem Drucksensor der Druckmesseinrichtung 14 ausgegebenen Messsignale sind über Messleitungen 25, 26 aus dem Gehäuse 3 geführt, um die Auswertung mittels eines externen Steuergeräts oder dergleichen zu ermöglichen. Beispielsweise können über die Messleitungen 25, 26 von der Druckmesseinrichtung 14 erzeugte Messladungen geführt werden.

Beim Betrieb der Druckmessglühkerze 1 wird das stabförmige Heizelement 2 aufgeheizt, wodurch sich auch das metallische Kraftübertragungselement 5 aufheizt. Eine Aufheizung des Kraftübertragungselements 5 ist aber auch in anderen Anwendungsfällen möglich, zum Beispiel auf Grund der in der Brennkammer vorhandenen heißen Abgase. Das Kraftübertragungselement 5 ist rohrförmig ausgestaltet und weist eine möglichst geringe Wandstärke auf, so dass der Wärmetransport in das Gehäuse 3 möglichst gering ist. Allerdings führt auch dieser geringe Wärmetransport noch zu relativ hohen Temperaturen des Kraftübertragungselements 5 innerhalb des Gehäuses 3. Um eine Beeinträchtigung der Druckmesseinrichtung 14 und somit des von der Druckmesseinrichtung 14 ermittelten Druckes zu verhindern oder zumindest zu reduzieren, ist eine Wärmeableitung auf das Gehäuse 3 in einem Bereich 27 innerhalb des Gehäuses 3, der in der Nähe der kammerseitigen Öffnung 4 liegt, günstig. Die Metallmembran 8 stellt ein Wärmeleitmittel dar, das zusammen mit dem Sensorkäfig 9 eine Ableitung der Wärme auf das Gehäuse 3 ermöglicht. Da die Verbindung des Sensorkäfigs 9 mit dem Gehäuse 3 möglichst nahe an der kammerseitigen Öffnung 4 vorgesehen ist und der mit dem Gehäuse 3 verbundene Motorblock eine sehr große Wärmekapazität besitzt, ist die Beeinträchtigung der Druckmesseinrichtung 14 durch den über die Metallmembran 8 erfolgenden Wärmetransport zumindest im Wesentlichen nicht beeinflusst. Allerdings ist die Metallmembran 8 vorzugsweise relativ dünn ausgestaltet, um elastisch zu sein, wodurch der Wärmewiderstand der Metallmembran 8 entsprechend groß ist. Um eine Wärmeableitung von dem Kraftübertragungselement 5 auf die Druckmesseinrichtung 14 zu verhindern oder zumindest zu reduzieren, ist das Wärmedämmelement 20 aus einem Material mit relativ niedriger spezifischer Wärmeleitfähigkeit hergestellt, wodurch eine Wärmeisolierung der Druckmesseinrichtung 14 gegenüber dem Kraftübertragungselement 5 geschaffen ist. Um den Wärmetransport von dem Kraftübertragungselement 5 auf das Gehäuse 3 weiter zu verbessern, kann außerdem ein wärmeleitendes Wärmeleitmittel in dem Bereich 27 angeordnet sein, das aus einer wärmeleitenden Paste, insbesondere auf Basis eines Graphits oder dergleichen, besteht.

Das Wärmedämmelement 20 ist vorzugsweise hülsen- oder ringförmig ausgestaltet, so dass der in Bezug auf die Wärmeleitung wirksame Querschnitt des Wärmedämmelements 20 reduziert ist. Somit weist das Wärmedämmelement 20 einen hohen Wärmewiderstand auf, wodurch in Bezug auf die Druckmesseinrichtung 14 eine vorteilhafte Wärmedämmung geschaffen ist.

Somit steht das Kraftübertragungselement 5 mit der Druckmesseinrichtung 14 in Wirkverbindung, um eine Druckmessung des in der Brennkammer herrschenden Druckes zu ermöglichen. Dabei ist das Wärmedämmelement 20 zwischen dem Kraftübertragungselement 5 und der Druckmesseinrichtung angeordnet, so dass das Kraftübertragungselement 5 über das Wärmedämmelement 20 mit der Druckmesseinrichtung 14 in Wirkverbindung steht. Das Wärmedämmelement 20 ist dabei vorzugsweise relativ starr ausgebildet, um die Druckmessung nicht zu beeinflussen. Andererseits weist das Wärmedämmelement 20 eine niedrige spezifische Wärmeleitfähigkeit auf, so dass ein hoher Wärmewiderstand gebildet ist. Somit wird eine Wärmedämmung der Druckmesseinrichtung 14 gegenüber dem Kraftübertragungselement 5 erzielt. Durch den Kragen 19 des Kraftübertragungselements 5 ist die Anlagefläche, mit der das Kraftübertragungselement 5 an dem Wärmedämmelement 20 anliegt, vorteilhaft vergrößert, so dass die mechanische Beanspruchung des Wärmedämmelements 20 verringert ist.

Das Wärmedämmelement 20 ist aus einem Werkstoff mit geringer Wärmeleitfähigkeit gebildet. Insbesondere eignet sich als solch ein Werkstoff Keramik, beispielsweise Steatit, Zirkoniumdioxid oder ein teilstabilisiertes Zirkoniumdioxid, mit einer Wärmeleitfähigkeit aus einem Bereich von etwa 1,2 W/mK bis etwa 3,5 W/mK, ein Glas mit einer Wärmeleitfähigkeit aus einem Bereich von etwa 0,8 W/mK bis etwa 1,0 W/mK oder ein Kunstharz-Glasfaser-Verbundwerkstoff mit einer Wärmeleitfähigkeit aus einem Bereich von etwa 0,1 W/mK bis etwa 0,2 W/mK, beispielsweise kann ein Glasharzepoxid mit einer Wärmeleitfähigkeit von etwa 0,2 W/mK zum Einsatz kommen.

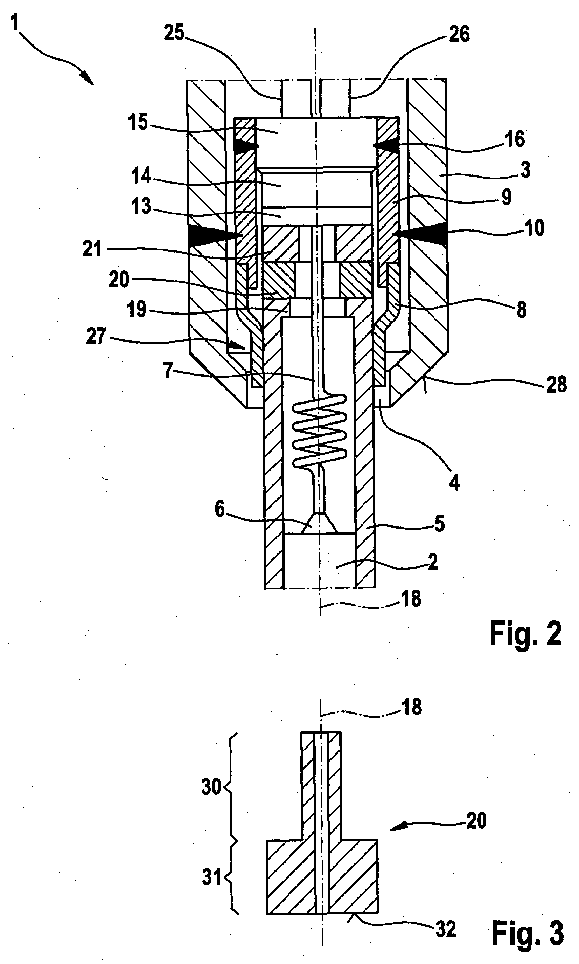

Fig. 2 zeigt den in Fig. 1 mit II bezeichneten Ausschnitt einer Druckmessglühkerze 1 gemäß einem zweiten Ausführungsbeispiel der Erfindung. In diesem Ausführungsbeispiel sind ein erstes Wärmedämmelement 20 und ein zweites Wärmedämmelement 21 vorgesehen, die zwischen dem Kraftübertragungselement 5 und der Druckmesseinrichtung 14 angeordnet sind. Dabei liegt das Kraftübertragungselement 5 mit seinem Kragen 19 an dem Wärmedämmelement 20 an. Ferner liegen die Wärmedämmelemente 20, 21 aneinander an. Außerdem liegt das zweite Wärmedämmelement 21 an dem Aufnahmeelement 13 an. Die Kraftübertragung von dem Kraftübertragungselement 5 auf die Druckmesseinrichtung 14 erfolgt somit über die Wärmedämmelemente 20, 21 und das Aufnahmeelement 13, wobei sich die Druckmesseinrichtung 14 an dem Fixierelement 15 abstützt.

Das erste Wärmedämmelement 20 ist aus einem Werkstoff gebildet, der eine höhere mechanische Festigkeit aufweist als der Werkstoff des zweiten Wärmedämmelements 21. Auf Grund der höheren Anforderung an die mechanische Festigkeit ist die Auswahl für den Werkstoff des ersten Wärmedämmelements 20 begrenzt. Die höhere mechanische Festigkeit ist insbesondere durch die Materialpaarung zwischen dem Kraftübertragungselement 5 und dem ersten Wärmedämmelement 20 sowie die Größe der Anlagefläche des Kragens 19 an dem ersten Wärmedämmelement 20 gegeben. Da die mechanische Beanspruchung des zweiten Wärmedämmelements 21 etwas geringer ist, sind auch die Möglichkeiten für die Wahl des Werkstoffs des zweiten Wärmedämmelements 21 etwas weniger beschränkt als für das erste Wärmedämmelement 20. Somit kann für das Material des zweiten Wärmedämmelements 21 gegebenenfalls ein Werkstoff ausgewählt werden, der eine niedrigere spezifische Wärmeleitfähigkeit aufweist als der Werkstoff des ersten Wärmedämmelements 20. Durch die Kombination von zwei oder mehr Wärmedämmelementen 20, 21 kann daher eine Optimierung des gesamten Wärmewiderstands der Wärmedämmelemente 20, 21 erreicht werden, um eine vorteilhafte Wärmedämmung der Druckmesseinrichtung 14 zu erzielen.

Die Metallmembran 8 ist in dem in der Fig. 2 dargestellten Ausführungsbeispiel teilweise innerhalb der kammerseitigen Öffnung 4 angeordnet und mit dem Kraftübertragungselement 5 mechanisch verbunden. Ferner ist die Metallmembran 8 in dem Bereich 27, der in der Nähe der kammerseitigen Öffnung 4 liegt, mit dem Sensorkäfig 9 verbunden. Somit ist die Metallmembran 8 relativ weit in Richtung eines Dichtkonus 28 des Gehäuses 3 angeordnet, so dass die Länge des Gehäuses 3 beziehungsweise der von dem Sensorkäfig 9 benötigte Platz optimiert ist. Eine entsprechend nahe Anordnung der Druckmesseinrichtung 14 zu dem Dichtkonus 28 hin ist durch die durch die Wärmedämmelemente 20, 21 vermittelte Wärmedämmung sowie die nahe an dem Dichtkonus 28 erfolgende Verbindung des Sensorkäfigs 9 mit dem Gehäuse 3 durch die Schweißnaht 10 möglich.

Fig. 3 zeigt ein Wärmedämmelement 20 einer Druckmessglühkerze 1 entsprechend einem dritten Ausführungsbeispiel der Erfindung in einer axialen, schematischen Schnittdarstellung. In diesem Ausführungsbeispiel übernimmt das Wärmedämmelement 20 auch die Funktion des in den Fig. 1 und 2 dargestellten Aufnahmeelements 13, das heißt das Wärmedämmelement 20 ist zugleich als Aufnahmeelement ausgestaltet. Das Wärmedämmelement 20 weist einen Aufnahmeabschnitt 30 und einen Kraftübertragungsabschnitt 31 auf. Der Aufnahmeabschnitt 30 dient zum Aufnehmen der Druckmesseinrichtung 14, insbesondere eines Drucksensors der Druckmesseinrichtung 14, und zum Aufnehmen des Fixierelements 15. Das Kraftübertragungselement 5 liegt mit seinem Kragen 19, wie es in den Fig. 1 und 2 dargestellt ist, bei dem dritten Ausführungsbeispiel direkt an einer Anlagefläche 32 des Kraftübertragungsabschnitts 31 des Wärmedämmelements 20 an. Allerdings können auch ein oder mehrere zusätzliche Wärmedämmelemente vorgesehen sein, über die das Kraftübertragungselement 5 mittelbar an der Anlagefläche 32 anliegt. Die Ausgestaltung mit einem Wärmedämmelement 20, das zugleich die Funktion des Aufnahmeelements 13 übernimmt, hat den Vorteil, dass ein separates Aufnahmeelement 13 eingespart werden kann und gegebenenfalls die Baulänge der Druckmessglühkerze 1 verringert werden kann.

Die Erfindung ist nicht auf die beschriebenen Ausführungsbeispiele beschränkt.

## Patentansprüche

1. Druckmessglühkerze zur Anordnung in einer Kammer einer Brennkraftmaschine, insbesondere für eine luftverdichtende, selbstzündende Brennkraftmaschine, mit einem Gehäuse (3), einem Kraftübertragungselement (5), das an einer kammerseitigen Öffnung (4) teilweise aus dem Gehäuse (3) ragt, und einer Druckmesseinrichtung (14), wobei das Kraftübertragungselement (5) mit der Druckmesseinrichtung (14) in Wirkverbindung steht, wobei die Druckmesseinrichtung (14) innerhalb des Gehäuses (3) angeordnet ist, wobei zumindest ein Wärmedämmelement (20) vorgesehen ist, das zwischen dem Kraftübertragungselement (5) und der Druckmesseinrichtung (14) angeordnet ist, wobei das Kraftübertragungselement (5) mittels zumindest des Wärmedämmelements (20) mit der Druckmesseinrichtung (14) in Wirkverbindung steht, wobei zwischen dem Kraftübertragungselement (5) und dem Gehäuse (3) zumindest ein wärmeleitendes Wärmeleitmittel vorgesehen ist, das einen Wärmefluss von dem Kraftübertragungselement (5) zu dem Gehäuse (3) ermöglicht, wobei das Wärmeleitmittel in einem Bereich (27) innerhalb des Gehäuses (3) vorgesehen ist, der zumindest in der Nähe der kammerseitigen Öffnung (4) liegt, und wobei das Wärmeleitmittel durch eine Metallmembran (8) ausgebildet ist, die zumindest teilweise innerhalb der kammerseitigen Öffnung (4) angeordnet und mit dem Kraftübertragungselement (5) mechanisch verbunden ist, **dadurch gekennzeichnet, dass** die Metallmembran (8) mit einem Sensorkäfig (9) verbunden ist und dass der Sensorkäfig (9) in der Nähe der kammerseitigen Öffnung (4) mittel einer Schweißnaht (10) mit dem Gehäuse (3) verbunden.

2. Druckmessglühkerze nach Anspruch 1, **dadurch gekennzeichnet, dass** das Wärmedämmelement (20) als hülsenförmiges oder ringförmiges Dämmelement (20) ausgestaltet ist, dass das Kraftübertragungselement (5) zumindest an einem dem Wärmedämmelement (20) zugewandten Ende als rohrförmiges Kraftübertragungselement (5) ausgestaltet ist und dass sich das rohrförmige Kraftübertragungselement (5) an dem Wärmedämmelement (20) abstützt.

3. Druckmessglühkerze nach Anspruch 1 oder 2, **dadurch gekennzeichnet, dass** das Wärmedämmelement (20) aus einer Keramik, einem Glas oder einem Glasfaser-Kunstharz-Verbundwerkstoff gebildet ist.

4. Druckmessglühkerze nach einem der Ansprüche 1 bis 3, **dadurch gekennzeichnet, dass** das Wärmedämmelement (20) als Aufnahmeelement ausgestaltet ist, das einen Kraftübertragungsabschnitt (31) und einen Aufnahmeabschnitt (30) aufweist, wobei zumindest ein Drucksensor der Druckmesseinrichtung (14) auf dem Aufnahmeabschnitt (30) angeordnet ist und wobei das Kraftübertragungselement (5) mit dem Drucksensor über den Kraftübertragungsabschnitt in Wirkverbindung steht.

5. Druckmessglühkerze nach einem der Ansprüche 1 bis 4, **dadurch gekennzeichnet, dass** zumindest ein erstes Wärmedämmelement (20) und ein zweites Wärmedämmelement (21) vorgesehen sind, dass das Kraftübertragungselement (5) an dem ersten Wärmedämmelement (20) anliegt, dass das zweite Wärmedämmelement (21) zwischen dem ersten Wärmedämmelement (20) und der Druckmesseinrichtung (14) angeordnet ist, und dass eine mechanische Festigkeit des ersten Wärmedämmelements (20) größer ist als eine mechanische Festigkeit des zweiten Wärmedämmelements (21).

6. Druckmessglühkerze nach Anspruch 5, **dadurch gekennzeichnet, dass** eine spezifische Wärmeleitfähigkeit des zweiten Wärmedämmelements (21) kleiner ist als eine spezifische Wärmeleitfähigkeit des ersten Wärmedämmelements (20).

## Claims

1. Pressure-measuring glow plug for arrangement in a chamber of an internal combustion engine, in particular for an air-compressing, auto-ignition internal combustion engine, having a housing (3), having a force-transmitting element (5) which projects partially out of the housing (3) at a chamber-side opening (4), and having a pressure-measuring device (14), wherein the force-transmitting element (5) is operatively connected to the pressure-measuring device (14), wherein the pressure-measuring device (14) is arranged within the housing (3), wherein at least one heat-insulating element (20) is provided which is arranged between the force-transmitting element (5) and the pressure-measuring device (14), wherein the force-transmitting element (5) is operatively connected to the pressure-measuring device (14) by way of at least the heat-insulating element (20), wherein, between the force-transmitting element (5) and the housing (3), there is provided at least one heat-conducting means which conducts heat and which permits a heat flow from the force-transmitting element (5) to the housing (3), wherein the heat-conducting means is provided in a region (27) within the housing (3) situated at least in the vicinity of the chamber-side opening (4), and wherein the heat-conducting means is formed by a metal membrane (8) which is arranged at least partially within the chamber-side opening (4) and which is mechanically connected to the force-transmitting element (5), **characterized in that** the metal membrane (8) is connected to a sensor cage (9), and **in that** the sensor cage (9) is, in the vicinity of the chamber-side opening (4), connected to the housing (3) by way of a weld seam (10).

2. Pressure-measuring glow plug according to Claim 1, **characterized in that** the heat-insulating element (20) is in the form of a sleeve-shaped or ring-shaped insulating element (20), **in that** the force-transmitting element (5) is, at least at an end facing toward the heat-insulating element (20), designed as a tubular force-transmitting element (5), and **in that** the tubular force-transmitting element (5) is supported on the heat-insulating element (20).

3. Pressure-measuring glow plug according to Claim 1 or 2, **characterized in that** the heat-insulating element (20) is formed from a ceramic, from a glass or from a glass fibre-plastic resin composite material.

4. Pressure-measuring glow plug according to one of Claims 1 to 3, **characterized in that** the heat-insulating element (20) is designed as a receiving element which has a force-transmitting section (31) and a receiving section (30), wherein at least one pressure sensor of the pressure-measuring device (14) is arranged on the receiving section (30), and wherein the force-transmitting element (5) is operatively connected to the pressure sensor by way of the force-transmitting section.

5. Pressure-measuring glow plug according to one of Claims 1 to 4, **characterized in that** at least one first heat-insulating element (20) and one second heat-insulating element (21) are provided, **in that** the force-transmitting element (5) bears against the first heat-insulating element (20), **in that** the second heat-insulating element (21) is arranged between the first heat-insulating element (20) and the pressure-measuring device (14), and **in that** a mechanical strength of the first heat-insulating element (20) is greater than a mechanical strength of the second heat-insulating element (21).

6. Pressure-measuring glow plug according to Claim 5, **characterized in that** a specific thermal conductivity of the second heat-insulating element (21) is lower than a specific thermal conductivity of the first heat-insulating element (20).

## Revendications

1. Bougie de préchauffage à mesure de pression destinée à être disposée dans une chambre d'un moteur à combustion interne, en particulier d'un moteur à combustion interne à autoallumage et compression d'air, comprenant un boîtier (3), un élément de transfert de force (5) qui fait saillie au moins en partie hors du boîtier (3) au niveau d'une ouverture (4) du côté de la chambre, et un dispositif de mesure de pression (14), l'élément de transfert de force (5) étant en liaison fonctionnelle avec le dispositif de mesure de pression (14), le dispositif de mesure de pression (14) étant disposé à l'intérieur du boîtier (3), au moins un élément d'isolation thermique (20) étant prévu, lequel est disposé entre l'élément de transfert de force (5) et le dispositif de mesure de pression (14), l'élément de transfert de force (5) étant en liaison fonctionnelle avec le dispositif de mesure de pression (14) au moyen d'au moins l'élément d'isolation thermique (20), au moins un moyen conducteur thermique conducteur de la chaleur étant prévu entre l'élément de transfert de force (5) et le boîtier (3), lequel permet un flux thermique de l'élément de transfert de force (5) au boîtier (3), le moyen conducteur thermique étant prévu dans une région (27) à l'intérieur du boîtier (3), laquelle région est située au moins à proximité de l'ouverture (4) du côté de la chambre, et le moyen conducteur thermique étant réalisé par une membrane métallique (8) qui est disposée au moins en partie à l'intérieur de l'ouverture (4) du côté de la chambre et qui est connectée mécaniquement à l'élément de transfert de force (5), **caractérisée en ce que** la membrane métallique (8) est connectée à une cage de capteur (9) et **en ce que** la cage de capteur (9) est connectée au boîtier (3) à proximité de l'ouverture (4) du côté de la chambre au moyen d'un cordon de soudure (10).

2. Bougie de préchauffage à mesure de pression selon la revendication 1, **caractérisée en ce que** l'élément d'isolation thermique (20) est configuré sous forme d'élément d'isolation (20) en forme de douille ou de forme annulaire, **en ce que** l'élément de transfert de force (5) est configuré, au moins au niveau d'une extrémité tournée vers l'élément d'isolation thermique (20), en tant qu'élément de transfert de force de forme tubulaire (5) et **en ce que** l'élément de transfert de force de forme tubulaire (5) s'appuie contre l'élément d'isolation thermique (20).

3. Bougie de préchauffage à mesure de pression selon la revendication 1 ou 2, **caractérisée en ce que** l'élément d'isolation thermique (20) est formé d'une céramique, d'un verre ou d'un matériau composite à base de fibre de verre et de résine synthétique.

4. Bougie de préchauffage à mesure de pression selon l'une quelconque des revendications 1 à 3, **caractérisée en ce que** l'élément d'isolation thermique (20) est configuré sous forme d'élément de logement, qui présente une portion de transfert de force (31) et une portion de logement (30), au moins un capteur de pression du dispositif de mesure de pression (14) étant disposé sur la portion de logement (30) et l'élément de transfert de force (5) étant en liaison fonctionnelle avec le capteur de pression par le biais de la portion de transfert de force.

5. Bougie de préchauffage à mesure de pression selon l'une quelconque des revendications 1 à 4, **caractérisée en ce qu'**au moins un premier élément d'isolation thermique (20) et un deuxième élément d'isolation thermique (21) sont prévus, **en ce que** l'élément de transfert de force (5) s'applique contre le premier élément d'isolation thermique (20), **en ce que** le deuxième élément d'isolation thermique (21) est disposé entre le premier élément d'isolation thermique (20) et le dispositif de mesure de pression (14), et **en ce qu'**une résistance mécanique du premier élément d'isolation thermique (20) est supérieure à une résistance mécanique du deuxième élément d'isolation thermique (21).

6. Bougie de préchauffage à mesure de pression selon la revendication 5, **caractérisée en ce qu'**une conductibilité thermique spécifique du deuxième élément d'isolation thermique (21) est inférieure à une conductibilité thermique spécifique du premier élément d'isolation thermique (20).
